# EUROPÄISCHE PATENTSCHRIFT

(11) **EP 2 043 251 B1**
(45) Veröffentlichungstag und Bekanntmachung des Hinweises auf die Patenterteilung: **19.05.2010**
(21) Anmeldenummer: 07117386.8
(22) Anmeldetag: 27.09.2007
(51) Int. Cl.: H02P 5/747, H02P 21/06, B23Q 5/56, B65H 23/198

(54) **Geregelte Elektromotorenanordnung für einen Verspannmechanismus**
Regulated electric motor assembly for a tensing mechanism
Agencement d'électromoteur réglé pour un mécanisme d'haubanage

(43) Veröffentlichungstag der Anmeldung: 01.04.2009
(73) Patentinhaber: BAUMÜLLER NÜRNBERG GMBH, D-90482 Nürnberg (DE)
(72) Erfinder: Jiang, Jinshen, Dr. Ing., 90431 Nürnberg (DE)
(74) Vertreter: Götz, Georg Alois

(56) Entgegenhaltungen:
- EP-A- 0 076 359
- EP-A- 0 428 783
- DE-A1- 2 345 711
- DE-A1- 10 103 667
- DE-B- 1 290 232

## Beschreibung

Die Erfindung betrifft ein feldorientiertes Regelverfahren für einen elektrischen Antrieb mit mehreren Elektromotoren, beispielsweise um einen Verspannmechanismus insbesondere für Strang- und/oder Getriebemittel zu realisieren. Für die Regelung werden Messungen an einem mehrphasigen Motor-Iststrom vorgenommen. Die Messwerte werden in Abhängigkeit von einem magnetischen Rotor-Feld- bzw. Flusswinkel in ein rotorbezogenes d,q-Koordinatensystem zu einer Längsstromkomponente und einer Querstromkomponente transformiert. Die gemessene Querstromkomponente wird einem Vergleich mit einer vorgegebenen Querstromkomponente eines Stromsollwerts unterworfen, um daraus eine Vorgabe für die Motorstromregelung zu gewinnen.

Ferner betrifft die Erfindung eine insbesondere zur Durchführung des Regelverfahrens geeignete Elektromotorenanordnung mit wenigstens zwei jeweils mehrphasig betreibbaren Elektromotoren. Weiter betrifft die Erfindung einen Lage- und/oder Geschwindigkeitsregler zur feldorientierten Regelung eines elektrischen Antriebs, der insbesondere zum Einsatz in dem vorgenannten Regelverfahren oder der vorgenannten Elektromotorenanordnung geeignet ist.

Für eine Steer-By-Wire-Lenkanlage wird ein Lenkaktuator vorgeschlagen (DE 101 03 667 A1), bei dem zwei Elektromotoren vorgesehen sind. Die Ritzel der Elektromotoren wirken auf ein Getrieberad, welches beispielsweise ein Zahnstangenlenkgetriebe oder eine Lenksäule mit einem darauf befestigten Lenkrad antreibt. Müssen nur geringe Momente vom Aktuator erzeugt werden, werden die beiden Elektromotoren so angesteuert, dass sie gegeneinander verspannt sind und somit kein Spiel in der Verzahnung zwischen Ritzel und Getrieberad auftritt. Dies ist gewährleistet, wenn die Zahnflanken des Ritzels und des Getrieberads spielfrei aneinander liegen. Der spielfreie Antrieb des Getrieberads lässt sich durch eine geeignete Ansteuerung der beiden Elektromotoren erreichen, indem die Drehrichtungen der beiden Elektromotoren gegeneinander gerichtet sind. Ferner wird vorgeschlagen, die beiden Elektromotoren je mit einem Rotorlagegeber zu versehen, um gegenüber einem möglichen Ausfall eines der beiden Elektromotoren durch Redundanz vorzusorgen.

Dem gegenüber wird zur effizienten Steuerbarkeit des Mehrmotoren-Elektroantriebs das im Anspruch 1 angegebene Regelverfahren vorgeschlagen. Eine zur Durchführung des Regelverfahrens geeignete Elektromotorenanordnung ist im unabhängigen Anspruch 5 angegeben. Ein ferner unter die allgemeine erfinderische Idee fallender Lage- und/oder Geschwindigkeitsregler ist im unabhängigen Anspruch 13 definiert. Optionale, vorteilhafte Ausbildungsbeispiele der Erfindung ergeben sich aus den abhängigen Ansprüchen.

Zur Effizienzsteigerung trägt bereits der erfindungsgemäße Einsatz zweier Synchronmotoren bei, die sich durch effektive Steuerbarkeit, hohen Wirkungsgrad, großen Leistungsfaktor und gleichzeitig kleines Bauvolumen auszeichnen, was Vorteile für Servoanwendungen wie bei Verspannmechanismen erbringt. Insbesondere zeichnen sich Synchronmaschinen durch ein mit dem Rotor fixiertes, umlaufendes Hauptfeld aus, und die Magnetflussverkettung beruht vielfach auf Permanentmagnete, die auf der Oberfläche des Rotors montiert sind und zu einem näherungsweise konstanten Rotorfluss führen, was die Regelbarkeit erleichtert.

Beim erfindungsgemäßen Verfahren werden die Polräder oder Rotoren der beiden Synchronmotoren zueinander mit ihren magnetischen Flussverkettungen oder sonstigen Magnetausrichtungen winkelmäßig versetzt, so dass sich ein und derselbe Phasenstrom in dem einen Motor als flussbildende (Längs-)Stromkomponente und in dem anderen Motor als Drehmoment bildende (Quer-)Stromkomponente auswirken kann. Der Phasen- beziehungsweise Winkelversatz ist in Bezug auf stationäre beziehungsweise stehende Koordinaten, insbesondere in Bezug auf ein statorbezogenes Koordinatensystem definiert.

Damit ist der Weg zum nächsten erfindungsgemäßen Verfahrensmerkmal eröffnet, nämlich die beiden Synchronmotoren von einem gemeinsamen Stromrichter aus mit jeweils denselben Phasenströmen zu speisen. Damit wird unter erheblicher Bauteile-Einsparung nur noch ein einziger Stromrichter, insbesondere Um- oder Wechselrichter, benötigt.

Im Rahmen der erfindungsgemäßen Regelung wird ein Voroder Verspannmoment-Soll- bzw. Stellwert vorgegeben, der einerseits der Querstromkomponente des Stromsollwerts überlagert wird. Andererseits wird dieser vorgegebene Verspannmoment-Stellwert über eine Vorzeichen-Umkehr gleichsam als Längsstromkomponente für den Stromsollwert verwendet. Diese Längsstromkomponente wirkt sich aufgrund des genannten Winkelversatzes der Magnetflusse im zweiten Synchronmotor als Drehmoment bildende Querstromkomponente aus, wohingegen im zweiten Motor die dem ersten Motor eingeprägte Querstromkomponente im zweiten Motor nun die flussbildende Längskomponente ergibt.

Hierdurch lässt sich ein koordiniertes und aufeinander abgestimmtes Bewegungsverhalten der Elektromotoren erzielen, was sich besonders gut zur Realisierung eines Verspannmechanismus zwecks Beseitigung von Spiel bei Getriebe- oder Strangmitteln eignet. Die Koordination der Bewegungsabläufe beruht auf der Kopplung der jeweiligen Flussverkettungen der Synchronmotoren über Winkelversatz, wobei ein und demselben Phasenstrom in einem Motor die Funktion als Querstromkomponente und im anderen Motor die Funktion als Längsstromkomponente zufällt.

Zur Vereinfachung des regelungstechnischen Aufwands ist es anzustreben, im Dauerbetrieb den Winkelversatz der jeweiligen Magnetflüsse der Rotoren der Synchronmotoren bzw. den Stellwert für das Vorspannmoment konstant zu halten. Dadurch kann der jeweilige Phasenstrom der beiden Synchronmotoren leicht und gezielt an Sollwertvorgaben angepasst werden.

Die im Rahmen der allgemeinen erfinderischen Idee liegende Synchronmotorenanordnung zeichnet sich durch deren Reihenschaltung aus. Dies lässt sich dadurch realisieren, dass der zweite Synchronmotor über die Anfänge seiner Phasenwicklungen mit den Enden der Phasenwicklungen des ersten Synchronmotors verbunden ist, der wiederum über die Anfänge seiner Phasenwicklungen mit dem Stromrichter verbunden ist. Dies ergibt eine Kopplung der beiden Synchronmotoren mit dem gemeinsamen Stromrichter. Durch diese Reihenschaltung aus Stromrichter, insbesondere Wechselrichter, ersten Synchronmotor und zweiten Synchronmotor wird das erfindungsgemäße Verfahrensmerkmal realisiert, dass durch beide Motoren derselbe Phasenstrom fließt. Dabei ist nur einer der beiden Synchronmotoren direkt mit dem gemeinsamen Stromrichter verbunden. Demnach sind die Synchronmotoren miteinander seriell über ihre Phasenwicklungen derart gekoppelt, dass jeder Synchronmotor vom gemeinsamen Stromrichter aus mit denselben Phasenströmen gespeist wird.

Wichtig ist, dass die magnetischen Ausrichtungen der Polräder bzw. Rotoren der beiden Synchronmotoren nicht in Phase, sondern gegeneinander mit einem Versatzwinkel versetzt sind. Dieser kann grundsätzlich zwischen 0 und ± 180°, so beispielsweise bei ± 45° liegen. In der Praxis haben sich vor allem 90° Winkelversatz als optimal gezeigt.

Zur Realisierung der Phasenverschiebung bzw. des Winkelversatzes zwischen den magnetischen Flussverkettungen oder magnetischen Ausrichtungen der beiden Synchronmotoren dient auf der Basis der Erfindung eine mechanische Kopplung, die beispielsweise durch Strang- oder Getriebemittel zwischen den Rotoren oder Polrädern realisiert sein kann. Diese Realisierung ist gleichzeitig für den erfindungsgemäßen Anwendungsfall "Verspannmechanismus" effizient, weil die mechanische Kopplung dann durch die zu verspannenden Strangzugmittel oder Zahnrand- oder sonstige Getriebemittel hergestellt werden kann. Sind die Zugstrangmittel oder die Getriebemittel verspannt, dann ist die mechanische Kupplung zwischen den Rotoren der Synchronmotoren und damit auch der Winkelversatz zwischen deren Flussverkettungen bzw. magnetischen Flussausrichtungen festgelegt bzw. definiert.

Das erfindungsgemäße Grundprinzip eröffnet nicht nur die Ausbildung des Zwei-Elektromotoren-Antriebs mit nur einem Wechsel- bzw. Stromrichter, sondern auch dahingehend, dass nur einer der beiden Synchronmotoren mit einer Einrichtung zur Lageerkennung (Sensorik und/oder Motormodell) versehen ist. Daraus ergibt sich konsequenterweise die weitere, Bauteile sparende und damit kostengünstige Erfindungsausbildung, dass ein einem Wechselrichter ansteuernder Regler im Rahmen eines Antriebsregelkreises beiden Synchronmotoren zugeordnet ist. Die zusätzliche Bauteile- und Kosteneinsparung, verbunden mit einer Erhöhung der technischen Zuverlässigkeit, liegt auf der Hand.

Eine erfindungsfunktionell angepasste Regelstruktur gemäß unabhängigen Anspruch 13 umfasst eine Einrichtung zur Erzeugung eines Vorspann- bzw. Verspannmoment-Stellwerts oder -Sollwerts. Dessen Ausgang wird einerseits einem an sich bekannten Reglerausgang für das Motormoment überlagert; andererseits wird - mit Vorzeichenumkehr - der Verspannmomentsteller-Ausgang, zweckmäßig nach einer Gewichtung mit dem Kehrwert der Motor-Flussverkettung, als Längsstromkomponente zur weiteren Verarbeitung zur Verfügung gestellt. So kann er einem Soll-/Istwertvergleich mit einem gemessenen Istwert für die Längsstromkomponente unterzogen werden, und die Regeldifferenz wird wie an sich bekannt einem Stromregler zugeführt. Der aus Längs- beziehungsweise Querstromreglern jeweils resultierende d- bzw. q-Stellstrom wirkt in einem Synchronmotor flussbildend und im anderen Synchronmotor Drehmoment bildend.

Die technische Zuverlässigkeit und Betriebssicherheit, insbesondere beim Anwendungsfall "Verspannmechanismus", lässt sich bei einer optionalen, vorteilhaften Erfindungsausbildung erhöhen, wonach die Quer- und Längsstrom-Sollwertausgänge jeweils mit einem Begrenzerglied versehen sind. Dieses ist jeweils zur Beschränkung des zugeordneten Sollwertausgangs auf einen Bereich mit einheitlichem Vorzeichen ausgebildet. Erfindungsgemäß sind die Vorzeichen der beiden Sollwertausgänge mittels der Begrenzerglieder einander entgegen gesetzt gehalten. Der damit erzielte Vorteil besteht darin, dass stets die mechanische Kopplung und damit eine Phasenverschiebung bzw. ein Versatzwinkel zwischen den magnetischen Flussverkettungen der beiden Synchronmotoren sichergestellt ist, so dass ein und derselbe Phasenstrom in einem Synchronmotor Drehmoment bildend und im anderen Synchronmotor flussbildend wirken kann. Darüber hinaus ist beim Anwendungsfall "Verspannen eines flexiblen Bandes oder sonstigen weichen Stranges" ein Durchhängen mit hoher Betriebssicherheit ausgeschlossen.

Um den Motormomentbereich möglichst voll ausnutzen zu können, wird eine Ausbildung des erfindungsgemäßen Geschwindigkeitsreglers dahingehend vorgeschlagen, dass der Ausgang des Motormoment-Stell- und/oder Sollwertgebers nicht nur dem Zweig der Querstrom-Sollwertkomponente, sondern auch dem Zweig der Längsstrom-Sollwertkomponente vorzugsweise im vollen Umfang zugeführt wird. In Konkretisierung dieses Gedankens ist dafür eine Summierstelle vorgesehen, deren beiden Eingängen das Motorstellmoment und, mit negativem Vorzeichen, das Vorspannmoment zugeführt wird. Aus dem Differenzwert wird über eine reziproke Gewichtung mit einem Wert für eine Flussverkettung (der sich nach den Umständen des technischen Einzelfalls bestimmt) die Längsstromkomponente abgeleitet. Indem bei dieser besonders vorteilhaften Ausbildung der Motormoment-Stellwert nicht nur für die Erzeugung und Ausgabe der Querstrom- sondern auch der Längsstrom-Sollwertkomponente mit verarbeitet bzw. verwendet wird, lässt sich der an sich zur Verfügung stehende Momenten-Stellbereich zu 100 % in beide Richtungen an- bzw. aussteuern bzw. ausschöpfen.

Nach einer weiteren vorteilhaften Erfindungsausbildung wird ein Vorspannmoment eingestellt, das etwa 50 % des maximal möglichen Motormoments entspricht. Damit lassen sich auch ohne die soeben erläuterte Abzweigung des Motormoment-Stellwerts in die Längsstrom-Sollwertkomponente wenigstens noch etwa 50 % des maximal möglichen Motormoments in die beiden Richtungen an- bzw. aussteuern.

Weitere Einzelheiten, Merkmale, Merkmalskombinationen, Vorteile und Wirkungen auf der Basis der Erfindung ergeben sich aus der nachfolgenden Beschreibung bevorzugter Ausführungsformen der Erfindung sowie aus den Zeichnungen. Diese zeigen in jeweils schematischer Darstellung:
- Figur 1: eine gerätetechnische Prinzipskizze einer erfindungsgemäßen Anwendung des Verspannens und Positionierens eines Zugseils,
- Figur 2: eine gerätetechnische Prinzipskizze einer erfindungsgemäßen Anwendung zum Verspannen eines Zahnradgetriebes,
- Figur 3: eine elektrische Anordnung des Verspann-Antriebs,
- Figur 4: ein Blockschema einer erfindungsfunktionell angepassten Regelstruktur,
- Figur 5: ein Blockschema einer weiteren, erfindungsfunktionell angepassten Regelstruktur,
- Figur 6a-6c: Strom- und Flusszeigerdiagramme für verschiedene Betriebsfälle.

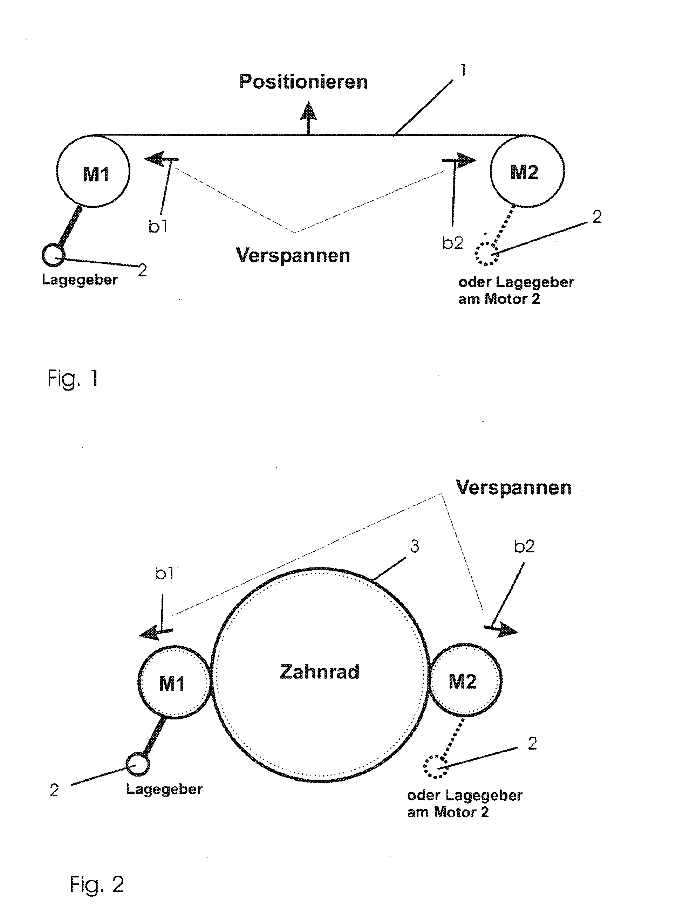

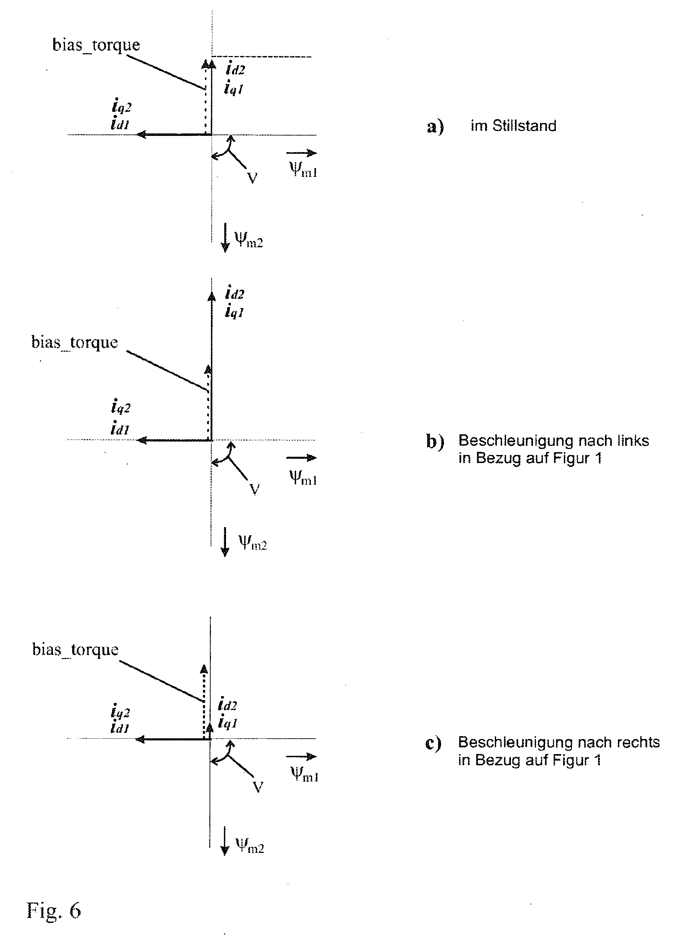

Gemäß Figur 1 sind die jeweiligen (nicht gezeichneten) Rotoren zweier Synchronmotoren M1, M2 über einen für verschiedene Zwecke tauglichen Zugstrang 1 mechanisch gekoppelt. Werden die beiden Synchronmotoren M1, M2 mit einander entgegen gesetzten Drehmomenten angesteuert (siehe unten), werden über den jeweiligen Rotor der Synchronmotoren M1, M2 den Enden des Zugstranges 1 entgegen gesetzte Beschleunigungen b1, b2 erteilt. Daraus resultiert ein Verspannen des Zugstrangs 1, beispielsweise ein Zugseil oder - Band, so dass ein Durchhängen zwischen den Synchronmotoren M1, M2 vermieden ist. Zudem sind durch das Verspannen die jeweiligen Rotoren der Synchronmotoren M1, M2 in ihrer Winkellage zueinander festgelegt. Erfindungsgemäß erfolgt die Festlegung derart, dass die jeweiligen magnetischen Flussverkettungen Ψ_{M1}, Ψ_{M2} (s. Figur 6) zueinander eine Phasenverschiebung bzw. einen Winkelversatz von vorzugsweise 90° aufweisen. Zur Ermöglichung eines geregelten Antriebs der beiden Synchronmotoren sind einer oder beide mit einem Lagegeber 2 versehen, wobei es auf der Basis der Erfindung grundsätzlich ausreichend ist, dass nur einer der beiden Synchronmotoren M1, M2 von einem Lagegeber 2 abgetastet wird.

Gemäß Figur 2 sind zum Verspannen eines Zahnradgetriebes zwei Synchronmotoren M1, M2 über mit ihren jeweiligen Rotor gekuppelte Zahnräder mit einem mittleren Zahnrad 3 in formschlüssigen Eingriff gebracht. Meist ist aber dieser Zahnradeingriff mit unerwünschtem Spiel zwischen den Zahnflanken behaftet, was die Positioniergenauigkeit beeinträchtigt. Um das Zahnrad-Spiel einzuschränken oder zu vermeiden, werden wiederum den beiden Synchronmotoren M1, M2 gegenläufige Drehmomente bzw. Beschleunigungen b1, b2 erteilt. Dadurch gelingt es, dass die gegenüberliegenden Zahnflanken miteinander kämmender Zahnräder ohne Spiel direkt aneinander liegen, also verspannt sind. Dann liegt wiederum eine eindeutige Festlegung Synchronmotor-Rotoren in ihrer Winkellage zueinander vor. Im Übrigen gelten die Ausführungen zur Figur 1 hier entsprechend.

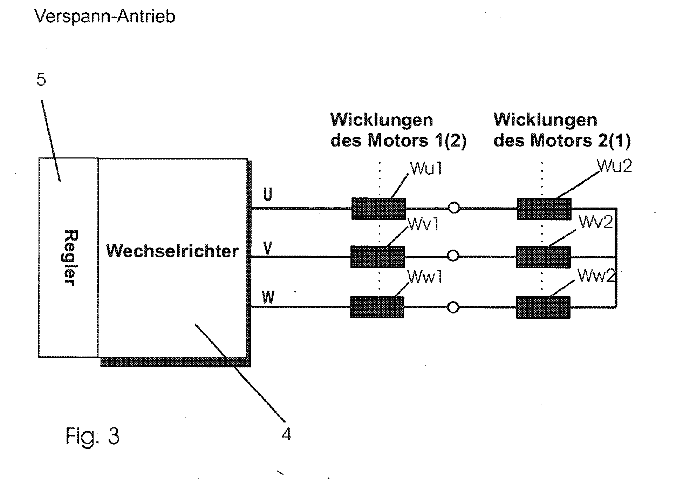

Gemäß Figur 3 sind die beiden Synchronmotoren M1, M2, vorzugsweise mit gleichgroßem Nennstrom, in Reihe geschaltet und von einem gemeinsamen Stromrichter 4, beispielsweise Wechselrichter, gespeist. Dazu sind die Anfänge der Motor-Phasenwicklungen W_{U1}, W_{V1}, W_{W1} des ersten Drehstrom-Synchronmotors M1 mit den Stromrichter-Phasenanschlüssen U, V, W direkt verbunden. Die Enden der Motorphasenwicklungen des Synchronmotors M1 sind entsprechend der Reihenschaltung direkt mit den Anfängen der Motorphasenwicklungen W_{U2}, W_{V2}, W_{W2} des zweiten Synchronmotors M2 verbunden. Die Enden der Phasenwicklungen des zweiten Synchronmotors M2 sind gemäß Figur 3 in Sternschaltung zusammen gefasst, können aber auch in Dreieck-Schaltung verbunden sein. Der einzige Stromrichter 4 wird von einer Regeleinrichtung 5 angesteuert, die den beiden Synchronmotoren M1, M2 gemeinsam zugeordnet ist.

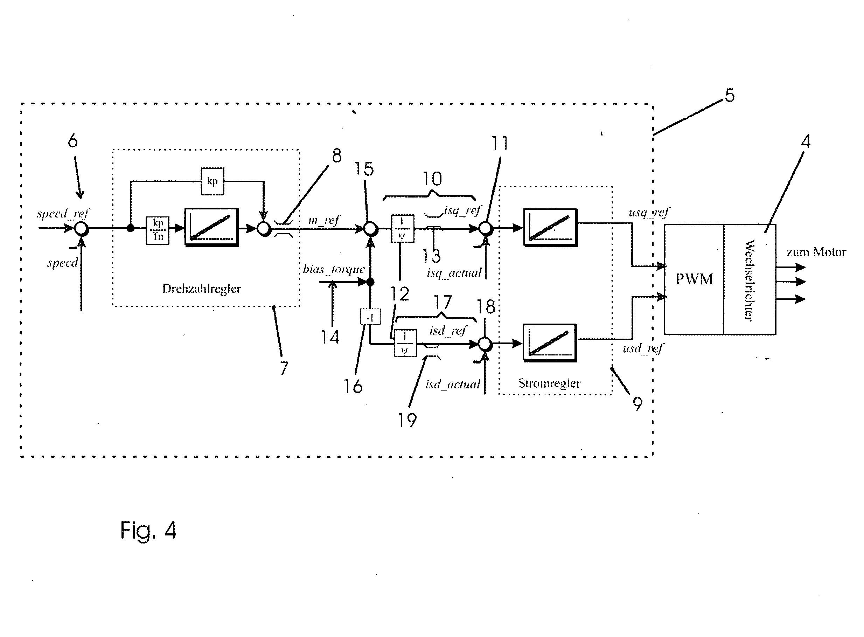

Gemäß Figur 4 umfasst die Regeleinrichtung 5 in an sich bekannter Weise eine Geschwindigkeits-Soll-/Istwert-Vergleichsstelle 6, einen nachgeordneten Drehzahlregler 7, vorzugsweise ausgeführt als PI-Regler, mit Begrenzer 8 an seinem Ausgang sowie einen Stromregler 9. Die Ausgänge des Stromreglers 9 für die Quer- und Längsspannungskomponenten usq_ref, usd_ref dienen der Ansteuerung eines nachgeschalteten Pulsweitenmodulators PWM, der wie an sich bekannt der Ansteuerung des Strom- bzw. Wechselrichters 4 dient.

Zwischen dem Geschwindigkeitsregler 7, welcher einen Soll- bzw. Stellwert m_ref für ein Motordrehmoment am Ausgang liefert, und den Stromregler 9 sind eine Einrichtung 10 zur Ableitung einer Querstrom-Sollwertkomponente isq_ref, nachfolgend "Querstrom-Sollwertsteller" 10 genannt, und letzterem nachfolgend ein Querstrom-Soll/Istwert-Vergleicher 11 angeordnet. Im Ausführungsbeispiel gemäß Figur 4 umfasst der Querstrom-Sollwertsteller 10 ein Multiplizierglied 12 zur Gewichtung des eingehenden Motormoment-Stellwerts m_ref mit dem Kehrwert einer Magnetflussverkettung Ψ sowie einen nachgeschalteten Plus-Begrenzer 13. Dieser schränkt die aus dem Multiplizierglied 12 hervorgehende Querstrom-Sollwertkomponente isq_ref auf einen Bereich positiven Vorzeichens ein.

Ferner ist zwischen dem Drehzahlregler 7 bzw. dem Motormomentsteller 7, 8, bestehend aus dem Ausgang des Drehzahlreglers 7 und dem Begrenzer 8, und dem Stromregler 9 ein Vorspannmomentsteller 14 angeordnet, dessen Ausgang einerseits einer ersten Summierstelle 15 zugeführt ist. Deren zweiter Eingang ist mit dem Ausgang des Motormomentstellers 7, 8 verbunden. Andererseits ist der Ausgang des Vorspannmomentstellers 14 über ein Vorzeichen-Umkehrglied 16 mit einem Längsstrom-Sollwertsteller 17 verbunden, über dessen Ausgang eine Längsstrom-Sollwertkomponente isd_ref einem Längsstrom-Soll/Istwert-Vergleicher 18 zugeführt wird. Der Längsstrom-Sollwertsteller 17 weist ebenfalls ein Multiplizierglied 12 zur reziproken Gewichtung des Stellwerts für ein Vorspannmoment mit der Magnetflussverkettung Ψ sowie einen ausgangsseitigen Minus-Begrenzer 19 auf. Letzterer schränkt - in analoger Funktion zum oben angesprochenen Plus-Begrenzer 13 - den aus dem Multiplizierglied 12 hervorgehenden Längsstrom-Sollwert isd_ref auf einen Bereich negativen Vorzeichens ein.

Durch die beiden Plus- bzw. Minus-Begrenzer ist vor allem im Hinblick auf den Anwendungsfall "Verspannmechanismus" sichergestellt, dass die im ersten Synchronmotor M1 und im zweiten Synchronmotor M2 jeweils Drehmoment bildenden Stromkomponenten zueinander entgegen gesetzte Vorzeichen aufweisen bzw. die beiden Motoren M1, M2 mit ihren Drehmomenten zur Verspannung gegeneinander arbeiten. Dazu ist entsprechend dem Ausführungsbeispiel nach Figur 4 der Vorspannmomentsteller 14 auf die Ausgabe eines konstanten Stellwerts für das Vorspannmoment bias_torque eingestellt bzw. eingerichtet. Zweckmäßig beträgt der konstant eingestellte Vorspannungs-Stellwert etwa 50 % des maximalen Motormoments, um noch einen verbleibenden Motormoment-Stellbereich von 50 % für die An- bzw. Aussteuerung ausschöpfen zu können.

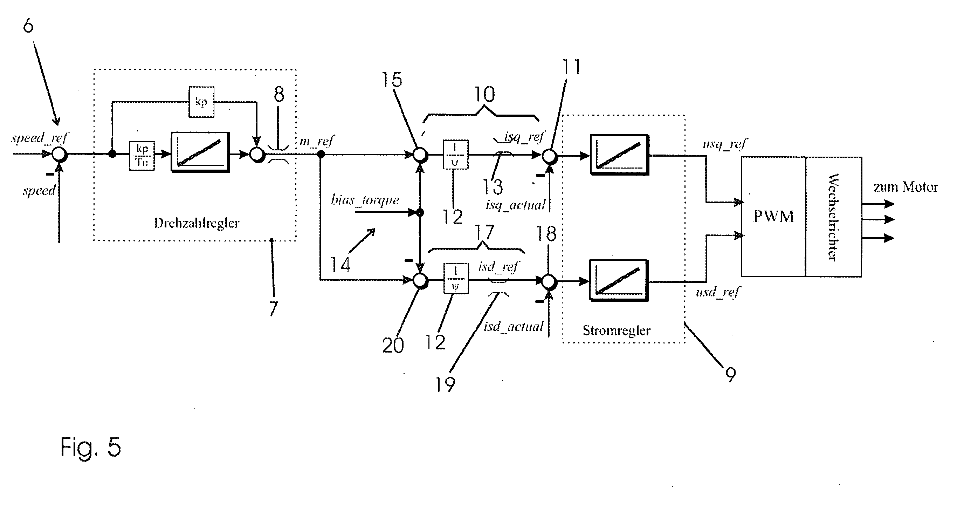

Gemäß Fig. 5 ist zur Erhöhung des verfügbaren Motormoment-Stellbereichs auf etwa 100 % zwischen dem Motormomentsteller 7, 8 und dem Stromregler 9 noch zusätzlich eine zweite Summierstelle 20 angeordnet, deren einem Eingang der Ausgang des Vorspannmomentstellers 14 mit negativem Vorzeichen zugeführt ist. Dem anderen Eingang ist ohne Vorzeichen-Umkehr der Ausgang des Motormomentstellers 7, 8 bzw. der Motormoment-Stellwert m_ref zugeführt. Der Ausgang der zweiten Summierstelle 20 ist dem Längsstrom-Sollwertsteller 17 (siehe oben) zugeführt. Damit lässt sich der aus dem Drehzahlregler 7 ausgegebene Motormoment-Stellwert betragsmäßig in vollem Umfang sowohl für den Querstrom-Sollwertsteller 10 als auch für den Längsstrom-Sollwertsteller 17 verwenden. Der Stellwert für das Vorspannmoment bias_torque wird über die erste bzw. zweite Summierstelle 15, 20 additiv bzw. subtraktiv überlagert. Während beim Ausführungsbeispiel nach Figur 4 sich ein einstellbarer Momentbereich für eine Beschleunigung von -50% bis +50% ergibt, wird mit dem Ausführungsbeispiel nach Figur 5 ein einstellbarer Momentbereich für die Beschleunigung von -100% bis +100% erzielt. Zweckmäßig ist beim Ausführungsbeispiel nach Figur 5 der Vorspannmomentsteller 14 von extern einstellbar ausgeführt.

Gemäß Figur 6a-c ist die magnetische Flussverkettung Ψ_{M2} des zweiten Synchronmotors M2 durch die mechanischen Kopplungen gemäß Figuren 1 und 2 nach vorheriger Drehausrichtung gegenüber der magnetischen Flussverkettung Ψ_{M1} des ersten Synchronmotors M1 um ca. 90° elektrisch nacheilend versetzt. Die Statorstromkomponenten, nämlich die Querstromkomponenten i_{q1} und i_{q2} sowie die Längsstromkomponenten i_{d1} und i_{d2} des ersten beziehungsweise zweiten Synchronmotors M1 beziehungsweise M2, sind in Feldkoordinaten für die Betriebsfälle a - Stillstand - b - Beschleunigung nach links in Bezug auf Figur 1 - und c - Beschleunigung nach rechts in Bezug auf Figur 1 - dargestellt. Unter der Annahme, dass die beiden Synchronmotoren M1, M² magnetisch etwa 100 % symmetrisch sind, lässt sich für die drei Betriebsfälle a, b, c das Drehmoment für das Ausführungsbeispiel der Figur 4 (einstellbarer Momentbereich: ±50%) wie folgt berechnen

### Betriebsfall a - Stillstand

Ein Stillstand ergibt sich, wenn die Drehmomente der beiden Synchronmotoren M1, M2 betragsmäßig gleich und einander entgegen gesetzt gerichtet sind bzw. umgekehrte Vorzeichen aufweisen. Dazu wird vom Stromregler gemäß Figur 4 die Vorgabe "Drehmoment 0" ausgegeben. Folglich wird sowohl dem Querstrom-Sollwertsteller 10 als auch dem Längsstrom-Sollwertsteller 17, letzterem mit umgekehrtem Vorzeichen, jeweils nur ein Stellwert gleichen Betrags für das Vorspannmoment bias_torque zugeleitet. Die im Stator der Synchronmotoren M1, M2 resultierenden, Drehmoment bildenden Querstromkomponenten i_{q1}, i_{q2} sind zwar nach Betrag gleich, aber weisen umgekehrte Vorzeichen auf. Infolgedessen ergeben sich über die jeweiligen vektoriellen Produkte Ψ_{M1X} i_{q1} (für den ersten Synchronmotor M1) und Ψ_{M2X} i_{q2} (für den zweiten Synchronmotor M2) einander entgegengesetzte Drehmomente jeweils gleichen Betrags, woraus der Stillstand resultiert.

Betriebsfall b - Beschleunigung nach links in Bezug auf Figur 1 Aufgrund eines über den Drehzahlregler 7 erzeugten und über den Motormomentsteller 7, 8 ausgegebenen Motormoment-Stellwert m_{ref} wird dem Querstrom-Sollwertsteller 10 gemäß Figur 4 eine Vorgabe zur Erhöhung der Querstrom-Sollwertkomponente erteilt, indem in der ersten Summierstelle 15 auf den Wert für das Vorspannungsmoment bias_torque ein Motormoment-Stellwert aufaddiert wird. Die dadurch wesentlich erhöhte Querstrom-Sollwertkomponente isq_ref wird im ersten Synchronmotor M1 als erhöhter Querstrom iq1 mit entsprechender Drehmomenterhöhung (siehe oben genanntes, vektorielles Produkt mit Ψ_{M1}) interpretiert, während diese erhöhte Stromkomponente im zweiten Synchronmotor M2 nur als flussbildende Komponente id2 arbeitet. Infolgedessen bringt der erste Synchronmotor M1 zur Herbeiführung der Linksbewegung des Zugstrangs 1 ein höheres Drehmoment als der zweite auf, das maximal das Doppelte des Drehmoments des zweiten Synchronmotors M2 betragen kann.

Betriebsfall c - Beschleunigung nach rechts gemäß Figur 1 Aufgrund entsprechender Motormoment-Stellwert-Ausgabe m_{ref} mit negativem Vorzeichen aus dem Motormomentsteller 7, 8 ergibt sich nach Addition der Vorspann-Moment-Vorgabe positiven Vorzeichens im Querstrom-Sollwertsteller 10 eine betragsmäßig erhebliche Erniedrigung der Querstrom-Sollwertkomponente, die in Figur 6c durch einen entsprechend verkürzten Zeiger für die Querstromkomponente i_{q1} veranschaulicht ist. Diese Stromkomponente arbeitet im zweiten Synchronmotor M2 als flussbildende Längsstromkomponente i_{d2}. Daneben gestrichelt gezeichnet ist der Stromvektor beziehungsweise -zeiger, welcher der konstant eingestellten Vorspannung bias_torque entspricht. Dieser schlägt sich über deren Zuführung zum Längsstrom-Sollwertsteller 17 in der konstant gebliebenen, Drehmoment bildenden Querstromkomponente i_{q2} des zweiten Synchronmotors M2 nieder (ein entsprechender Stromwert wird im ersten Synchronmotor M1 nur als flussbildend verwendet). In diesem Fall beträgt das vom ersten Synchronmotor M1 aufgebrachte Drehmoment nur einen Bruchteil des vom zweiten Synchronmotor M2 aufgebrachten Drehmomentes, welches allein auf den fest eingestellten Vorspannmomentsteller 14 zurückgeht.

### Bezugszeichenliste

- M1, M2: erster bzw. zweiter Synchronmotor
- 1: Zugstrang
- b1, b2: Beschleunigung
- Ψₘ₁, Ψₘ₂: Flussverkettung des ersten bzw. zweiten Synchronmotors
- 2: Lagegeber
- 3: Zahnrad
- 4: Stromrichter
- W_{U1, 2}: Motor-Drehstromphasenwicklung
- W_{V1,2}: Motor-Drehstromphasenwicklung
- W_{W1,2}: Motor-Drehstromphasenwicklung
- U, V, W: Stromrichter-Phasenanschlüsse
- 5: Regeleinrichtung
- 6: Geschwindigkeits-Soll-/Istwert-Vergleichsstelle
- 7: Drehzahlregler
- 8: Begrenzer
- 9: Stromregler
- usq_ref: Querspannungskomponente
- usd_ref: Längsspannungskomponente
- PWM: Pulsweitenmodulator
- m_ref: Motormoment-Stellwert
- isq_ref: Querstrom-Sollwertkomponente
- 10: Querstrom-Sollwertsteller
- 11: Querstrom-Soll-/Istwert-Vergleicher
- 12: Multiplizierglied
- Ψ: Magnetflussverkettung
- 13: Plusbegrenzer
- 7, 8: Motormomentsteller
- 14: Vorspannmomentsteller
- 15: erste Summierstelle
- 16: Vorzeichen-Umkehrglied
- 17: Längsstrom-Sollwertsteller
- 18: Längsstrom-Soll/Istwertvergleicher
- isd_ref: Längsstrom-Sollwertkomponente
- 19: Minus-Begrenzer
- bias_torque: Vorspannmoment
- 20: zweite Summierstelle
- i_{q1}, i_{q2}: Querstromkomponenten des ersten bzw. zweiten Synchronmotors M1 bzw. M2
- i_{d1}, i_{d2}: Längsstromkomponente
- V: Winkelversatz

## Patentansprüche

1. Feldorientiertes Regelverfahren für einen elektrischen Antrieb mit mehreren Elektromotoren, zur Realisierung eines Verspannmechanismus insbesondere für Strang- und/oder Getriebemittel (1,3), unter Verwendung von Messungen an einem mehrphasigen Motor-Iststrom (U,V, W), deren Messwerte in Abhängigkeit von einem magnetischen Rotor-Feldbeziehungsweise Flusswinkel in ein rotorflussbezogenes d,q-Koordinatensystem zu einer Längsstromkomponente und einer Querstromkomponente transformiert werden, und die Quer- und Längsstromkomponenten vom Ist-Strom einem Vergleich mit vorgegebenen Quer- und Längsstromkomponenten (isq_ref,isd_ref) eines Stromsollwerts unterworfen werden, mit folgenden Schritten:
a) als Elektromotoren werden zwei Synchronmotoren (M1,M2) verwendet
b) die Polräder oder Rotoren der beiden Synchronmotoren (M1,M2) werden zueinander derart verdreht oder ausgerichtet und dann mechanisch gekoppelt, dass sich zwischen ihren magnetischen Flussverkettungen (ψₘ₁, ψₘ₂) oder sonstigen Magnetflüssen ein Winkelversatz (V) bildet
c) die beiden Synchronmotoren werden von einem gemeinsamen Stromrichter aus mit jeweils denselben Phasenströmen gespeist beziehungsweise durchflossen, wobei die Anfänge der Phasenwicklung eines Synchronmotors mit den Enden der Phasenwicklungen des anderen Synchronmotors verbunden sind, und die Anfänge der Phasenwicklungen dieses anderen Synchronmotors mit dem Stromrichter verbunden sind
d) für ein Vorspannmoment wird ein Soll- oder Stellwert vorgegeben und einem von einem Regler (7) ausgegebenen Motormoment-Stellwert (m_ref) überlagert, woraus eine Querstromkomponente (isq_ref) für den Stromsollwert abgeleitet wird
e) aus dem vorgegebenen Vorspannmoment-Stellwert (m_ref) wird mit Vorzeichen-Umkehr eine Längsstromkomponente (isd_ref) für den Stromsollwert abgeleitet.

2. Regelverfahren nach Anspruch 1, **dadurch gekennzeichnet, dass** in einem Dauerbetrieb der Vorspannmoment-Stellwert (m_ref) und/oder Winkelversatz (V) konstant gehalten werden.

3. Regelverfahren nach Anspruch 1 oder 2, **dadurch gekennzeichnet, dass** eine Stromkomponente im ersten Synchronmotor (M1) als Drehmoment bildende Querstromkomponente (i_{q1}) oder als Fluss bildende Längsstromkomponente (i_{d1}) und gleichzeitig im zweiten Synchronmotor (M2) als Fluss bildende Längsstromkomponente (i_{d2}) beziehungsweise als Drehmoment bildende Querstromkomponente (i_{q2}) verwendet wird.

4. Regelverfahren nach einem der vorangehenden Ansprüche, **dadurch gekennzeichnet, dass**, jeweils nach Betrag und Phase, die Querstromkomponente (i_{q1}) im ersten Synchronmotor (M1) mit der Längsstromkomponente (i_{d2}) im zweiten Synchronmotor (M2), und die Längsstromkomponente (i_{d1}) im ersten Synchronmotor (M1) mit der Querstromkomponente (i_{q2}) im zweiten Synchronmotor (M2) übereinstimmen.

5. Elektromotorenanordnung, insbesondere für einen Verspannmechanismus mit Strang- und/oder Getriebemitteln (1,3), mit wenigstens zwei jeweils mehrphasig betreibbaren Elektromotoren, zur Durchführung des Regelverfahrens nach einem der vorangehenden Ansprüche, **gekennzeichnet durch** folgende Merkmale:
a) die zwei Elektromotoren sind als Synchronmotoren (M1,M2) realisiert,
b) die Synchronmotoren sind über ihre Phasenwicklungen (W_{U1,U2},W_{V1,V2},W_{W1,W2}) miteinander in Reihe geschaltet
c) die Synchronmotoren (M1,M2) sind zu ihrer Speisung mit einem gemeinsamen Stromrichter (4) gekoppelt,
d) die Synchronmotoren (M1,M2) sind mechanisch über ihre Polräder beziehungsweise Rotoren derart miteinander gekoppelt, dass sie in ihrer Winkellage zueinander versetzt sind, und/oder deren magnetische Flussverkettungen (ψₘ₁,ψₘ₂) oder sonstige magnetische Ausrichtungen miteinander einen Versatzwinkel (V) einschließen.

6. Elektromotorenanordnung nach Anspruch 5, **dadurch gekennzeichnet, dass** der Winkelversatz (V) der Polräder beziehungsweise Rotoren und/oder deren magnetischen Ausrichtungen zueinander 90 Grad beträgt oder zwischen 0 Grad und ±180 Grad liegt.

7. Elektromotorenanordnung nach Anspruch 5 oder 6, **dadurch gekennzeichnet, dass** die mechanische Kopplung zwischen den Rotoren oder Polrädern mittels Strang- oder Getriebemittel (1,3) realisiert ist.

8. Elektromotorenanordnung nach Anspruch 7, **dadurch gekennzeichnet, dass** die Strang- oder Getriebemittel (1,3) einen stramm gezogenen Zugstrang oder kämmende und über ihre aneinander liegenden Zahnflanken verspannte Zahnräder umfassen.

9. Elektromotorenanordnung nach einem der vorangehenden Ansprüche, **dadurch gekennzeichnet, dass** ein erster der beiden Synchronmotoren (M1,M2) über seine Phasenwicklungen (W_{U,1}W_{V,1},W_{W1}) direkt mit dem Stromrichter (4) verbunden ist, und der zweite Synchronmotor (M2) vom Stromrichter (4) aus mittelbar über den ersten Synchronmotor (M1) gespeist beziehungsweise bestromt ist.

10. Elektromotorenanordnung nach einem der vorangehenden Ansprüche, **dadurch gekennzeichnet, dass** bei dem Synchronmotor, der in einer Synchronmotor-Reihe gegenüber dem gemeinsamen Stromrichter an letzter Stelle angeordnet ist, die Phasenwicklungen (W_{U2},W_{V2},W_{W2}) in Stern- oder Dreieckschaltung verbunden sind, während bei dem oder den anderen, in der Reihe nicht an der letzten Stelle angeordneten Synchronmotoren (Mit1) die Anfänge und Enden ihrer Phasenwicklungen W_{U1},W_{V1},W_{W1}) zur externen Verbindung mit dem Stromrichter (4) oder einem benachbarten Synchronmotor (M2) zur Verfügung gestellt sind.

11. Elektromotorenanordnung nach einem der vorangehenden Ansprüche, **dadurch gekennzeichnet, dass** zur Realisierung eines Antriebsregelkreises einer oder beide Synchronmotoren (M1,M2) mit einer Einrichtung (2) zur Lageerkennung versehen sind, deren Ausgang einer den Stromrichter (4) ansteuernden Regeleinrichtung (5) zugeführt ist.

12. Elektromotorenanordnung nach einem der vorangehenden Ansprüche, **dadurch gekennzeichnet, dass** den Synchronmotoren (M1,M2) eine gemeinsame, einen Lage- und/oder Geschwindigkeitsregler (7) umfassende Regeleinrichtung (5) zugeordnet ist, die mit dem Stromrichter (4) zu dessen Ansteuerung gekoppelt ist.

13. Lage- und/oder Geschwindigkeitsregler zur feldorientierten Regelung einer Elektromotorenanordnung nach einem der vorangehenden Ansprüche, mit wenigstens einer Einrichtung (7,8) zur Berechnung und Ausgabe eines Motormoment-Stellwerts (mit_ref) (nachfolgend "Motormomentstelle" genannt), aus deren beziehungsweise dessen Ausgang basierend auf ein rotorflussbezogenes d,q-Koordinatensystem eine Querstrom-Sollwertkomponente (isq_ref) für einen nachgeordneten Querstromregler abgeleitet und ausgegeben wird, **gekennzeichnet durch** eine Einrichtung (14) zur Erzeugung eines Vorspannmoment-Stellwerts (nachfolgend "Vorspannmomentsteller" genannt), deren beziehungsweise dessen Ausgang einerseits mit dem Ausgang des Motormomentstellers (7,8) verknüpft und andererseits einer Einrichtung (17) zur Ableitung einer Längsstrom-Sollwertkomponente (isd_ref) (nachfolgend "Längsstrom-Sollwertsteller" genannt) für einen nachgeordneten Längsstromregler zugeführt ist.

14. Regler nach Anspruch 13, **dadurch gekennzeichnet, dass** die Ausgänge der Motormomentsteller (7,8) und Vorspannmomentsteller (14) miteinander additiv, insbesondere über eine Summierstelle (15), verknüpft sind.

15. Regler nach Anspruch 13 oder 14, **dadurch gekennzeichnet, dass** der Vorspannmomentsteller-Ausgang mit dem Längsstrom-Sollwertsteller (1/ψ) zur Ableitung des Längsstrom-Sollwerts (isd_ref) über ein Vorzeichen-Umkehrglied (-1) verbunden ist.

16. Regler nach einem der vorangehenden Ansprüche, **dadurch gekennzeichnet, dass** mit dem Eingang des Längsstrom-Sollwertstellers (1/ψ) zusätzlich zum Vorspannmomentsteller-Ausgang der Ausgang des Motormomentstellers (7,8) gekoppelt ist.

17. Regler nach einem der vorangehenden Ansprüche, **dadurch gekennzeichnet, dass** am Eingang des Längsstrom-Sollwertstellers (17) eine Summierstelle (20) angeordnet ist, worüber der Ausgangswert des Vorspannmomentstellers (14) vom Ausgangswert des Motormomentstellers (7,8) subtrahiert wird, und das Subtraktionsergebnis dem Eingang des Längsstrom-Sollwertstellers (17:12.1/ψ ,19) zugeführt wird.

18. Regler nach einem der vorangehenden Ansprüche, **dadurch gekennzeichnet, dass** der Vorspannmomentsteller (14) einen vorzugsweise extern betätigbaren Eingang zur Einstellung des Vorspannmoments besitzt.

19. Regler nach einem der Ansprüche, **dadurch gekennzeichnet, dass** der Ausgang des Vorspannmomentstellers (14) mit Vorzeichen-Umkehr (16) einer Summierstelle (20) zugeführt ist, deren zweiter Eingang mit dem Ausgang des Motormomentstellers (7,8) verbunden ist, und der Summierstellen-Ausgang mit dem Eingang des Längsstrom-Sollwertstellers (17.12.1/ψ ,19) zur Ableitung des Längsstrom-Sollwerts (isd_ref) verbunden sind.

20. Regler nach einem der vorangehenden Ansprüche, **dadurch gekennzeichnet, dass** die Quer- und Längsstrom-Sollwertausgänge (isq_ref, isd-ref) jeweils mit einem Begrenzerglied (13,19) versehen sind, die zur Beschränkung der Ausgänge auf Bereiche mit zueinander entgegengesetzten Vorzeichen ausgebildet sind.

21. Regler nach einem der vorangehenden Ansprüche, **dadurch gekennzeichnet, dass** der Vorspannmomentsteller (14) dazu eingestellt und/oder ausgebildet ist, einen 50 Prozent oder etwa 50 Prozent des maximal möglichen Motormoments entsprechenden Stellwert an den jeweiligen Eingang der Einrichtungen (10.19.1/ψ) zur Ableitung eines Querstrom- und/oder Längsstrom-Sollwerts (isq_ref, isd_ref) auszugeben.

## Claims

1. Field-oriented control process for an electric drive having plural electric motors for realising a bracing mechanism in particular for strand and/or transmission means (1, 3) using measurements on a multiphase motor actual current (U, V, W) whose measured values are transformed as a function of a magnetic rotor field- or flux-angle into a rotor flux-related d, q-coordinate system for a longitudinal current component and a transverse current component, and the transverse and longitudinal current components of the actual current are subjected to a comparison with predetermined transverse- and longitudinal-current components (isq_ref, isd_ref) of a current setpoint value, having the following stages:
a) as electric motors two synchronous motors (M1, M2) are used
b) the magnet wheels or rotors of the two synchronous motors (M1, M2) are rotated or aligned relative to one another and then mechanically coupled in such a manner that between their magnetic flux linkings (Ψₘ₁, Ψₘ₂) or other magnetic fluxes an offset angle (V) is formed
c) the two synchronous motors are supplied or fed from a common power converter with the same phase currents, the leading ends of the phase winding of one synchronous motor being connected to the trailing ends of the phase windings of the other synchronous motor, and the leading ends of the phase windings of this other synchronous motor being connected to the power converter
d) for a biasing torque a setpoint or control value is predetermined and superimposed on a motor torque control value (m_ref) transmitted by a control (7), from which a transverse current component (isq_ref) for the current setpoint value is derived
e) from the predetermined bias torque control value (m_ref), a longitudinal current component (isd_ref) for the current setpoint value is derived by reversing the sign.

2. Control process according to claim 1, **characterised in that** over longterm operation the bias torque control value (m_ref) and/or offset angle (V) is kept constant.

3. Control process according to claim 1 or 2, **characterised in that** a current component in a first synchronous motor (M1) is used as a transverse current component (I_{q1}) forming the torque or as a longitudinal current component (1_{d1}) forming the flux and simultaneously in the second synchronous motor (M2) as a longitudinal current component (1_{d2}) forming the flux or as a transverse current component (I_{q2}) forming the torque.

4. Control process according to one of the preceding claims, **characterised in that** in each case according to the amount and phase, the transverse current component (1_{q1}) in the first synchronous motor (M1) agrees with the longitudinal current component (I_{d2}) in the second synchronous motor (M2) and the longitudinal current component (I_{d1}) in the first synchronous motor (M1) agrees with the transverse current component (1_{q2}) in the second synchronous motor (M2).

5. Electric motor arrangement, in particular for a bracing mechanism having strand and/or transmission means (1, 3), having at least two electric motors respectively operable in multiphase, for carrying out the control process according to one of the preceding claims, **characterised by** the following features:
a) the two electric motors are realised as synchronous motors (M1, M2),
b) the synchronous motors are connected in series via their phase windings (W_{u1, u2}, Wᵥ₁, W_{w1, w2})
c) the synchronous motors (M1, M2) are coupled to a common power converter (4) for their power supply
d) the synchronous motors (M1, M2) are coupled together mechanically via their magnet wheels or rotors in such a manner that they are offset relative to one another in their angular position, and/or their magnetic flux linkings (Ψₘ₁,Ψₘ₂) or other magnetic alignments include an offset angle (V) with one another.

6. Electric motor arrangement according to claim 5, **characterised in that** the offset angle (V) of the magnet wheels or rotors and/or their magnetic alignments are at 90 degrees relative to one another or between 0 degrees and ± 180 degrees.

7. Electric motor arrangement according to claim 5 or 6, **characterised in that** the mechanical coupling between the rotors or magnet wheels is realised by means of strand or transmission means (1, 3).

8. Electric motor arrangement according to claim 7, **characterised in that** the strand or transmission means (1,3) comprise a tautly drawn pull strand or gearwheels meshing and braced via their mutually abutting tooth flanks.

9. Electric motor arrangement according to one of the preceding claims, **characterised in that** the first of the two synchronous motors (M1, M2) is connected direct to the power converter (4) via its phase windings (Wᵤ₁, Wᵥ₁, W_{w1}) and the second synchronous motor (M2) is fed or supplied with current from the power converter (4) via the first synchronous motor (M1).

10. Electric motor arrangement according to one of the preceding claims, **characterised in that** in the case of the synchronous motor which is disposed last in a series of synchronous motors with respect to the common power converter, the phase windings (W ᵤ₂, Wᵥ₂, W_{w2}) are connected in a star-shaped or triangular circuit, whilst in the case of the other synchronous motor(s) (Mit1) not disposed last in the series, the leading and trailing ends of their phase windings (Wᵤ₁, Wᵥ₁, W_{w1}) are placed available for external connection to the power converter (4) or an adjacent synchronous motor (M2).

11. Electric motor arrangement according to one of the preceding claims, **characterised in that** in order to form a drive control circuit one or both synchronous motors (M1, M2) are provided with a device (2) for position recognition, whose output is fed to a control device (5) triggering the power converter (4).

12. Electric motor arrangement according to one of the preceding claims, **characterised in that** a common control device (5) comprising a position-and/or speed control (7) is allocated to the synchronous motors (M1, M2) and is coupled to the power converter (4) in order to trigger the same.

13. Position- and/or speed control for the field-oriented control of an electric motor arrangement according to one of the preceding claims, having at least one device (7, 8) for computing and outputting a motor torque control value (mit_ref) (referred to below as "motor torque regulator"), from whose output(s), based on a rotor-flux-related d, q-coordinate system, a transverse current setpoint value component (isq_ref) is derived and is output for a downstream transverse current control, **characterised by** a device (14) for generating a bias torque control value (referred to below as "bias torque regulator"), whose output(s) is/are on the one side linked to the output of the motor torque regulator (7, 8) and on the other side fed to a device (17) for deriving a longitudinal current setpoint value component (isd_ref) (referred to below as "longitudinal current setpoint value regulator") for a downstream longitudinal current control.

14. Regulator according to claim 13, **characterised in that** the outputs of the motor torque regulator (7, 8) and bias torque regulator (14) are linked together additively, in particular via an integrating position (15).

15. Regulator according to claim 13 or 14, **characterised in that** the bias torque regulator output is connected to the longitudinal current setpoint value regulator (1/Ψ) for deriving the longitudinal current setpoint value (isd_ref) via a sign-reversing member (-1).

16. Regulator according to one of the preceding claims, **characterised in that** the output of the motor torque regulator (7, 8) is coupled to the input of the longitudinal current setpoint regulator (1/Ψ) in addition to the bias torque regulator output.

17. Regulator according to one of the preceding claims, **characterised in that** at the input of the longitudinal current setpoint value regulator (17) an integrating position (20) is disposed, via which the output value of the bias torque regulator (14) is subtracted from the output value of the motor torque regulator (7, 8), and the subtraction result is fed to the input of the longitudinal current setpoint value (17; 12, 1/Ψ, 19).

18. Regulator according to one of the preceding claims, **characterised in that** the bias torque regulator (14) has a preferably externally actuatable input for setting the bias torque.

19. Regulator according to one of the claims, **characterised in that** the output of the bias torque regulator (14) is fed to an integrating position (20) of reversed sign (16), whose second input is connected to the output of the motor torque regulator (7, 8) and the integrating position output is connected to the input of the longitudinal current setpoint value regulator (17; 12, 1/Ψ, 19) for deriving the longitudinal current setpoint value (isd_ref).

20. Regulator according to one of the preceding claims, **characterised in that** the transverse- and longitudinal-current setpoint value outputs (isq_ref, isd_ref) are each provided with a limiter member (13, 19) which are formed to limit the outputs to ranges with mutually opposite signs.

21. Regulator according to one of the preceding claims, **characterised in that** the bias torque regulator (14) is set and/or formed so as to output a control value corresponding to 50% or roughly 50 % of the maximum possible motor torque at the respective input of the devices (10, 19, 1/Ψ) in order to derive a transverse current- and/or longitudinal current-setpoint value (isq_ref, isd_ref).

## Revendications

1. Procédé de réglage à orientation de champ destiné à un entraînement électrique avec plusieurs moteurs électriques, pour réaliser un mécanisme de tension, en particulier pour des moyens à bande et/ou des moyens à engrenages (1, 3), en utilisant des mesures d'un courant réel de moteur polyphasé (U, V, W), dont les valeurs de mesure sont transformées, en fonction d'un champ de rotor magnétique ou d'un angle de flux dans un système de coordonnées d,q relatif au flux de rotor, en une composante de courant longitudinale et une composante de courant transversale, et en soumettant les composantes de courant transversale et longitudinale du courant réel à une comparaison avec des composantes prédéfinies de courant transversale et longitudinale (isq_réf, isd_réf) d'une valeur de consigne du courant, comprenant les étapes suivantes :
a) deux moteurs synchrones (M1, M2) sont utilisés comme moteurs électriques,
b) les roues polaires ou les rotors des deux moteurs synchrones (M1, M2) sont tournées ou orientées l'une par rapport à l'autre et ensuite couplées mécaniquement l'une à l'autre de manière à former un décalage angulaire (V) entre leurs enchaînements de flux magnétiques (Ψₘ₁, Ψₘ₂) ou d'autres flux magnétiques,
c) les deux moteurs synchrones sont alimentés ou traversés à partir d'un convertisseur commun par respectivement les mêmes courants de phase, les départs des enroulements de phase d'un moteur synchrone étant connectés aux fins des enroulements de phase de l'autre moteur synchrone et les départs des enroulements de phase de cet autre moteur synchrone étant connectés au convertisseur,
d) pour un couple de polarisation, une valeur de consigne ou une valeur de réglage est prédéfinie et superposée à une valeur de réglage (m_réf) du couple moteur délivrée par un régulateur (7), dont est tirée une composante de courant transversale (isq_réf) pour la valeur de consigne du courant, et
e) une composante de courant longitudinale (isd_réf) pour la valeur de consigne du courant est tirée, par inversion de signe, de la valeur de réglage (m_réf) prédéfinie du couple de polarisation.

2. Procédé de réglage selon la revendication 1, **caractérisé en ce qu'**en service continu, la valeur de réglage (m_réf) du couple de polarisation et/ou le décalage angulaire (V) est ou sont maintenus constants.

3. Procédé de réglage selon la revendication 1 ou 2, **caractérisé en ce que** l'on utilise une composante de courant dans le premier moteur synchrone (M1) comme composante de courant transversale (i_{q1}) formant un couple de torsion ou comme composante de courant longitudinale (i_{d1}) formant un flux et, en même temps, dans le second moteur synchrone (M2), comme composante de courant longitudinale (i_{d2}) formant un flux ou comme composante de courant transversale (i_{q2}) formant un couple de torsion.

4. Procédé de réglage selon l'une quelconque des revendications précédentes, **caractérisé en ce que**, respectivement en fonction de la valeur de la phase, la composante de courant transversale (i_{q1}) dans le premier moteur synchrone (M1) correspond à la composante de courant longitudinale (i_{d2}) dans le second moteur synchrone (M2) et la composante de courant longitudinale (i_{d1}) dans le premier moteur synchrone (M1) correspond à la composante de courant transversale (i_{q2}) dans le second moteur synchrone (M2).

5. Agencement de moteurs électriques, en particulier pour un mécanisme de tension avec des moyens à bande et/ou des moyens à engrenages (1, 3), comprenant au moins deux moteurs électriques pouvant respectivement opérer en plusieurs phases, pour mettre en oeuvre le procédé de réglage selon l'une quelconque des revendications précédentes, **caractérisé par** les points suivants :
a) les deux moteurs électriques se présentent sous la forme de moteurs synchrones (M1, M2),
b) les moteurs synchrones sont connectés l'un à l'autre en série par le biais de leurs enroulements de phase (W_{U1,U2}, W_{V1,V2}, W_{W1,W2}),
c) les moteurs synchrones (M1, M2) sont couplés à un convertisseur commun (4) pour leur alimentation,
d) les moteurs synchrones (M1, M2) sont couplés mécaniquement l'un à l'autre via leurs roues polaires ou rotors de sorte qu'ils soient décalés l'un par rapport à l'autre dans leur position angulaire et/ou que leurs enchaînements de flux magnétiques (ψₘ₁, ψₘ₂) ou d'autres orientations magnétiques présentent entre eux ou elles un angle de décalage (V).

6. Agencement de moteurs électriques selon la revendication 5, **caractérisé en ce que** le décalage angulaire (V) des roues polaires ou des rotors et/ou de leurs orientations magnétiques l'un par rapport à l'autre s'élève à 90 degrés ou se situe entre 0 et ± 180 degrés.

7. Agencement de moteurs électriques selon la revendication 5 ou 6, **caractérisé en ce que** le couplage mécanique entre les rotors ou les roues polaires est réalisé à l'aide de moyens à bande et/ou de moyens à engrenages (1, 3).

8. Agencement de moteurs électriques selon la revendication 7, **caractérisé en ce que** les moyens à bande et/ou les moyens à engrenages (1, 3) comprennent un brin de traction tendu ou des roues dentées s'engrenant par leurs flancs dentés situés l'un contre l'autre.

9. Agencement de moteurs électriques selon l'une quelconque des revendications précédentes, **caractérisé en ce qu'**un premier des deux moteurs synchrones (M1, M2) est connecté par le biais de ses enroulements de phase (W_{U1}, W_{V1}, W_{W1}) directement au convertisseur (4) et **en ce que** le second moteur synchrone (M2) est alimenté à partir du convertisseur (4) de manière indirecte par le biais du premier moteur synchrone (M1).

10. Agencement de moteurs électriques selon l'une quelconque des revendications précédentes, **caractérisé en ce que**, dans le cas du moteur synchrone qui est disposé en dernière position dans une série de moteurs synchrones par rapport au convertisseur commun, les enroulements de phase (W_{U2}, W_{V2}, W_{W2}) sont connectés en étoile ou en triangle, tandis que, dans le cas de l'un ou de l'autre des moteurs synchrones (Mit1) non disposé en dernière position dans la série, les départs et les fins de leurs enroulements de phase (W_{U1}, W_{V1}, W_{W1}) sont mis à disposition pour la connexion externe avec le convertisseur (4) ou un moteur synchrone (M2) voisin.

11. Agencement de moteurs électriques selon l'une quelconque des revendications précédentes, **caractérisé en ce que**, pour réaliser un circuit régulateur d'entraînement, un moteur synchrone (M1, M2) ou les deux est ou sont équipés d'un dispositif (2) de détection de position, dont la sortie est acheminée à un dispositif de réglage (5) commandant le convertisseur (4).

12. Agencement de moteurs électriques selon l'une quelconque des revendications précédentes, **caractérisé en ce que** l'on affecte aux moteurs synchrones (M1,M2) un dispositif de réglage (5) commun comprenant un régulateur de position et/ou de vitesse (7), qui est couplé au convertisseur (4) pour sa commande.

13. Régulateur de position et/ou de vitesse destiné au réglage par orientation de champ d'un agencement de moteurs électriques selon l'une quelconque des revendications précédentes, comprenant au moins un dispositif (7, 8) de calcul et de délivrance d'une valeur de réglage (mit_réf) de couple moteur (désignée ci-après par "actionneur de couple moteur"), à partir des sorties ou de la sortie duquel est tirée et délivrée, sur la base d'un système de coordonnées d,q relatif au flux rotorique, une composante de valeur de consigne de courant transversale (isq_réf) pour un régulateur de courant transversal situé en aval, **caractérisé par** un dispositif (14) destiné à générer une valeur de réglage de couple de polarisation (désignée ci-après par "actionneur de couple de polarisation"), dont les sorties ou la sortie est ou sont, d'une part, combinées à la sortie de l'actionneur de couple moteur (7, 8) et acheminées, d'autre part, à un dispositif (17) destiné à tirer une composante de valeur de consigne de courant longitudinale (isd_réf) (désignée ci-après par "actionneur de valeur théorique de courant longitudinale") pour un régulateur de courant longitudinal situé en aval.

14. Régulateur selon la revendication 13, **caractérisé en ce que** les sorties de l'actionneur de couple moteur (7, 8) et de l'actionneur de couple de polarisation (14) sont combinées l'une à l'autre de manière additive, en particulier via un point de sommation (15).

15. Régulateur selon la revendication 13 ou 14, **caractérisé en ce que** la sortie de l'actionneur de couple de polarisation est connectée à l'actionneur de valeur théorique de courant longitudinale (1/ψ) pour tirer la valeur théorique de courant longitudinale (isd_réf) par le biais d'un élément inverseur de signe (-1).

16. Régulateur selon l'une quelconque des revendications précédentes, **caractérisé en ce que** la sortie de l'actionneur de couple moteur (7, 8) est couplée à l'entrée de l'actionneur de valeur théorique de courant longitudinale (1/ψ), en plus de la sortie de l'actionneur de couple de polarisation.

17. Régulateur selon l'une quelconque des revendications précédentes, **caractérisé en ce que** l'on agence à l'entrée de l'actionneur de valeur théorique de courant longitudinale (17) un point de sommation (20), moyennant quoi la valeur de sortie de l'actionneur de couple de polarisation (14) est soustraite de la valeur de sortie de l'actionneur de couple moteur (7, 8) et le résultat de la soustraction est acheminé à l'entrée de l'actionneur de valeur théorique de courant longitudinale (17 ; 12, 1/ψ ,19).

18. Régulateur selon l'une quelconque des revendications précédentes, **caractérisé en ce que** l'actionneur de couple de polarisation (14) possède une entrée actionnable de préférence de l'extérieur pour régler le couple de polarisation.

19. Régulateur selon l'une quelconque des revendications, **caractérisé en ce que** la sortie de l'actionneur de couple de polarisation (14) est acheminée avec une inversion de signe (16) à un point de sommation (20), dont la seconde entrée est connectée à la sortie de l'actionneur de couple moteur (7,8) et la sortie du point de sommation est connectée à l'entrée de l'actionneur de valeur théorique de courant longitudinale (17 ; 12, 1/ψ, 19) pour en tirer la valeur théorique de courant longitudinale (isd_réf).

20. Régulateur selon l'une quelconque des revendications précédentes, **caractérisé en ce que** les sorties de valeurs théoriques de courant transversale et longitudinale (isq_réf, isd-réf) sont pourvues, respectivement, d'un élément limiteur (13, 19), qui est conçu pour limiter les sorties à des plages ayant des signes opposés l'un à l'autre.

21. Régulateur selon l'une quelconque des revendications précédentes, **caractérisé en ce que** l'actionneur de couple de polarisation (14) est réglé et/ou conçu pour délivrer une valeur de réglage correspondant à 50 pour cent ou à environ 50 pour cent du couple moteur maximum possible à l'entrée respective des dispositifs (10, 19, 1/ψ) pour en tirer une valeur théorique de courant transversale et/ou longitudinale (isq_réf, isd_réf).
